# EUROPÄISCHE PATENTSCHRIFT

(11) **EP 2 909 040 B1**
(45) Veröffentlichungstag und Bekanntmachung des Hinweises auf die Patenterteilung: **14.06.2023**
(21) Anmeldenummer: 13779743.7
(22) Anmeldetag: 18.10.2013
(51) Int. Cl.: G02B 27/12, B42D 25/29, B42D 25/324, B42D 25/328

(54) **OPTISCH VARIABLES FLÄCHENMUSTER**
OPTICALLY VARIABLE SURFACE PATTERN
MOTIF BIDIMENSIONNEL OPTIQUEMENT VARIABLE

(30) Priorität: 19.10.2012 DE 102012020550
(43) Veröffentlichungstag der Anmeldung: 26.08.2015
(60) Teilanmeldung: 21020108.3
(73) Patentinhaber: Giesecke+Devrient Currency Technology GmbH, 81677 München (DE)
(72) Erfinder: FUHSE, Christian, 83624 Otterfing (DE)
(74) Vertreter: Giesecke + Devrient IP
(86) Internationale Anmeldenummer: PCT/EP2013/003152
(87) Internationale Veröffentlichungsnummer: WO 2014/060115

(56) Entgegenhaltungen:
- WO-A1-2004/003668
- WO-A1-2008/098753
- DE-A1-102008 046 128
- DE-A1-102010 049 600
- US-A1- 2005 168 723
- US-A1- 2011 226 858
- LEECH P W ET AL: "Optically variable micro-mirror arrays fabricated by graytone lithography", MICROELECTRONIC ENGINEERING, ELSEVIER PUBLISHERS BV., AMSTERDAM, NL, Bd. 83, Nr. 2, 1. Februar 2006 (2006-02-01), Seiten 351-356, XP024954881, ISSN: 0167-9317, DOI: 10.1016/J.MEE.2005.10.002 [gefunden am 2006-02-01]

## Beschreibung

Die Erfindung betrifft ein optisch variables Flächenmuster sowie ein Wertdokument mit einem solchen optisch variablen Flächenmuster.

Zu schützende Gegenstände werden häufig mit einem optisch variablen Flächenmuster ausgestattet, das die Überprüfung der Echtheit des Gegenstandes erlaubt und zugleich als Schutz vor unerlaubter Reproduktion dient.

Bekannt sind diffraktive Reliefstrukturen (Hologramme) sowie strahlenoptisch wirksame Reliefstrukturen (Mikrospiegel bzw. -prismen).

Diffraktive Reliefstrukturen erzeugen durch Beugung Farben, wobei in der Regel beim Kippen das ganze Farbspektrum durchlaufen wird oder durch Farbmischung beispielsweise bei Mattstrukturen ein weißer Farbeindruck erzeugt wird.

Strahlenoptisch wirksame Reliefstrukturen liefern von sich aus zunächst farblose Darstellungen. Durch das Vorsehen einer zusätzlichen Farbbeschichtung (beispielsweise einer Farbkipp- bzw. Colorshift-Beschichtung) können Farben oder auch Farbwechsel erzeugt werden. Solche Beschichtungen liefern unter einem bestimmten Betrachtungswinkel bzw. Glanzwinkel der Mikrospiegel in der Regel nur eine Farbe bzw. einen durch die Beschichtung definiert eingestellten Farbumschlag.

Ausgehend hiervon ist es Aufgabe der Erfindung, ein optisch variables Flächenmuster bereitzustellen, mit dem verschiedene optische Effekte realisiert werden können.

Aus der Druckschrift DE 10 2008 046 128 A1 ist ein optisch variables Sicherheitselement mit einem achromatischen, matt glänzenden Mattbereich bekannt, der eine reflektierende Mattstruktur aus einer Vielzahl von Mikroelementen enthält. Zur Herstellung des Sicherheitselements wird das Oberflächenprofil der Mattstruktur in eine Lackschicht geprägt. Die geprägte Lackschicht kann dabei mit einer Reflexionsschicht beschichtet werden. Alternativ kann die Lackschicht auf einer Reflexionsschicht aufgebracht und nach dem Aufbringen geprägt werden.

Die Druckschrift WO 2008/098753 A1 beschreibt einen hochbrechenden Prägelack zur Herstellung mikrooptischer Anordnungen.

Die Druckschrift DE 10 2010 049 600 A1 befasst sich mit einem Sicherheitselement mit einem Substrat, das in einem Flächenbereich ein optisch variables Flächenmuster enthält, welches bei unterschiedlicher Beleuchtungs- und/oder Betrachtungsrichtung unterschiedliche Darstellungen zeigt. Das optisch variable Flächenmuster besteht hierzu aus einer zumindest lokal periodischen Anordnung von im Wesentlichen strahlenoptisch wirkenden Reflexionselementen, die in ihrer Höhe über dem Flächenbereich aperiodisch gegeneinander versetzt sind und beispielsweise durch eine mit einer semitransparenten metallischen Beschichtung versehene Reliefstruktur gebildet sein können.

In der Druckschrift US 2011/0226858 A1 sind metallenthaltende Transaktionskarten beschrieben.

Erfindungsgemäß wird die Aufgabe durch ein optisch variables Flächenmuster mit den Merkmalen von Anspruch 1 gelöst.

Damit stellt das erfindungsgemäße optisch variable Flächenmuster zwei reflektierte Lichtstrahlen, die in unterschiedlichen Richtungen reflektiert werden, zur Verfügung, mit denen Farbeffekte und/oder Bewegungseffekte verwirklicht werden können.

Bei dem erfindungsgemäßen optisch variablen Flächenmuster ist eine transparente oder teiltransparente Schicht auf der Reflexionsschicht ausgebildet, wobei zur Ausbildung der Mikrospiegel die von der Reflexionsschicht abgewandte Seite der transparenten oder teiltransparenten Schicht in einem vorbestimmten Bereich strukturiert ist. Im vorbestimmten Bereich ist eine teilreflektive Beschichtung ausgebildet. Die teilreflektive Beschichtung kann auch als reflexionserhöhende Beschichtung bezeichnet werden.

Die Strukturierung und/ oder die teilreflektive Beschichtung können insbesondere so ausgebildet sein, dass eine (im Wesentlichen) strahlenoptisch wirksame Reliefstruktur (und keine Beugungsstruktur) vorliegt, die die Reflexion des einfallenden Lichtes in die erste Richtung bewirkt.

Eine reflexionserhöhende Beschichtung im Sinne der vorliegenden Erfindung ist insbesondere eine Beschichtung, die den Reflexionsgrad beispielsweise nur von etwa 20% auf etwa 50% erhöht, wie z.B. semitransparente Schichten. Die reflexionserhöhende Beschichtung kann eine metallische Beschichtung sein, die beispielsweise aufgedampft ist. Als Beschichtungsmaterial kann insbesondere Aluminium, Gold, Silber, Kupfer, Palladium, Chrom, Nickel und/ oder Wolfram sowie deren Legierungen verwendet werden. Alternativ kann die reflexionserhöhende Beschichtung durch eine Beschichtung mit einem Material mit hohem Brechungsindex gebildet werden. Die teilreflektive Beschichtung und/ oder die Reflexionsschicht können in Form von Mustern, Zeichen oder Codierungen vorliegen und/ oder Aussparungen in Form von Mustern, Zeichen oder Codierungen aufweisen.

Die teilreflektive Beschichtung kann eine farbkippende Schicht sein, die z.B. als Dünnschichtsystem oder Dünnfilm-Interferenzbeschichtung ausgebildet ist. Dies kann z.B. durch eine hochbrechende Schicht geeigneter Dicke (die Dicke ist bevorzugt so eingestellt, dass die gewünschte Farbe durch Interferenz der an der oberen und unteren Grenzfläche reflektierten Lichtstrahlen entsteht), eine Schichtfolge Metallschicht-dielektrische Schicht-Metallschicht oder eine Schichtfolge aus mindestens drei dielektrischen Schichten, wobei die Brechzahl der mittleren Schicht geringer ist als die Brechzahl der beiden anderen Schichten, verwirklicht werden. Die farbkippende Schicht kann auch als Interferenzfilter, dünne semitransparente Metallschicht mit selektiver Transmission durch Plasmaresonanzeffekte, Nanopartikel, etc. ausgebildet sein. Die farbkippende Schicht kann insbesondere auch als Flüssigkristallschicht, diffraktive Reliefstruktur oder Subwellenlängengitter realisiert sein.

Die Mikrospiegel bzw. die teilreflektiven Flächen der Mikrospiegel, die die Reflexion des einfallenden Lichtes in die erste Richtung bewirken, sind bevorzugt eben ausgebildet. Die ebene Ausbildung der teilreflektiven Flächen ist natürlich nicht im mathematisch exakten Sinne zu verstehen, da sich in der Praxis herstellungsbedingt in der Regel nie perfekt ebene Flächenstücke herstellen lassen. Die ebene Ausbildung ist daher bevorzugt so zu verstehen, dass es insoweit eben ist, als es herstellungstechnisch möglich ist. Alternativ ist es möglich, die teilreflektiven Flächen der Mikrospiegel gekrümmt auszubilden (z.B. konkav, konvex oder gewellt). Jedoch ist die Krümmung der teilreflektiven Flächen der Mikrospiegel bevorzugt gering.

Die teiltransparente Schicht kann z.B. als gefärbte Schicht oder als Farbschicht ausgebildet sein. Damit kann die Farbe des in der zweiten Richtung reflektierten Lichtes beeinflusst oder eingestellt werden.

Bei der transparenten oder teiltransparenten Schicht kann es sich um eine Lackschicht und insbesondere um eine Prägelackschicht handeln.

Ferner kann die Strukturierung der transparenten oder teiltransparenten Schicht durch Prägen gebildet sein.

Des Weiteren kann zwischen der Reflexionsschicht und der transparenten oder teiltransparenten Schicht eine teiltransparente Farbschicht angeordnet sein. Mit der teiltransparenten Farbschicht kann die Farbe des in der zweiten Richtung reflektierten Lichtes beeinflusst oder eingestellt werden.

Die transparente oder teiltransparente Schicht und/ oder die teilreflektive Beschichtung kann zumindest in einem Teil des sichtbaren Spektrums einen Brechungsindex von mindestens 1,6 und bevorzugt von mindestens 1,8 aufweisen.

Ferner können die Mikrospiegel in ein Medium eingebettet sein, das zumindest in einem Teil des sichtbaren Spektrums einen Brechungsindex aufweist, der von dem Brechungsindex der transparenten oder teiltransparenten Schicht und/oder der teilreflektiven Beschichtung um mindestens 0,1, bevorzugt um mindestens 0,2 und besonders bevorzugt um mindestens 0,4 abweicht. Diese Einbettungsschicht kann Bestandteil des optisch variablen Flächenmusters sein. Es ist jedoch auch möglich, dass es sich dabei um das angrenzende Medium (z.B. Luft handelt).

Bei dem optisch variablen Flächenmuster können die Reflexionsschicht und die Mikrospiegelanordnung so ausgebildet sein, dass das in die erste und zweite Richtung reflektierte Licht unterschiedliche Farben aufweist.

Ferner können die teiltransparenten Mikrospiegel ein sägezahnförmiges Profil bilden. Die Anordnung der Mikrospiegel kann regelmäßig oder auch unregelmäßig sein.

Insbesondere kann die den teiltransparenten Mikrospiegeln zugewandte Seite der Reflexionsschicht und/ oder die den Mikrospiegeln abgewandte Seite der Reflexionsschicht eben ausgebildet sein.

Bei dem erfindungsgemäßen optisch variablen Flächenmuster können mehrere der Mikrospiegel in einer Anordnungsrichtung nebeneinander angeordnet sein und ihre Abmessung in der Anordnungsrichtung kann im Bereich von 2 µm bis 3mm, bevorzugt von 3 µm bis 100 µm und besonders bevorzugt von 5 µm bis 30 µm liegen.

Das optisch variable Flächenmuster kann so ausgebildet sein, dass bei parallel zur makroskopischen Oberflächennormalen des Flächenmusters einfallendem Licht die erste und zweite Richtung des reflektierten Lichtes auf unterschiedlichen Seiten der makroskopischen Oberflächennormalen liegen. Es ist jedoch auch möglich, dass die erste und zweite Richtung des reflektierten Lichtes auf der gleichen Seite der makroskopischen Oberflächennormalen liegen.

Die teilreflektive Beschichtung kann eine oder mehrere (insbesondere hochbrechende) dielektrische Schicht bzw. Schichten, eine semitransparente metallische Schicht, eine Schicht aus halbleitendem Material und/oder eine flüssigkristalline Schicht aufweisen.

Ferner kann die Farberzeugung an der Reflexionsschicht und/oder an der Oberfläche der Mikrospiegel durch Subwellenlängenstrukturen, insbesondere Subwellenlängengitter, realisiert sein.

Die Reflexionsschicht kann eine oder mehrere metallische Schichten, eine Dünnfilm-Colorshift-Schicht (insbesondere mit dem Aufbau Absorber/Dielektrikum/Reflektor oder dem Aufbau Absorber/ Dielektrikum/ Reflektor/Dielektrikum/Absorber), eine oder mehrere (insbesondere hochbrechende) dielektrische Schichten und/ oder eine flüssigkristalline Schicht aufweisen.

Als dielektrisches Material für die teilreflektive Beschichtung und die Reflexionsschicht kann z.B. ZnS, SiO₂, TiO₂, MgF₂ verwendet werden.

Das erfindungsgemäße optisch variable Flächenmuster ist so ausgebildet, dass mit den in die erste Richtung reflektierten Lichtstrahlen (oder den in die zweite Richtung reflektierten Lichtstrahlen) unterschiedlichste Bewegungseffekte z.B. beim Kippen des Flächenmusters verwirklicht werden. So kann z.B. der in der US 7,517,578 B2 genannte Effekt"Rolling Bar" verwirklicht werden. Erfindungsgemäß ergibt sich dann durch die in die zweite Richtung (bzw. in die erste Richtung) reflektierten Lichtstrahlen ebenfalls ein (entsprechender) Bewegungseffekt, der die gleiche oder eine gegensätzliche Bewegungsrichtung und eine gleiche oder unterschiedliche Bewegungsgeschwindigkeit aufweisen kann. Auch andere Bewegungseffekte beim Verkippen des optisch variablen Flächenmusters können verwirklicht werden, wie z.B. sogenannte Flip-, Lauf- oder Pumpeffekte. Die Bewegung erfolgt hier mit Vorteil gleichläufig oder gegenläufig.

Ferner kann das erfindungsgemäße optisch variable Flächenmuster (einschließlich seiner Weiterbildungen) als Sicherheitselement, insbesondere als Sicherheitselement für Sicherheitspapiere, Wertdokumente oder dergleichen verwendet werden.

Das Sicherheitselement kann insbesondere als Sicherheitsfaden, Aufreißfaden, Sicherheitsband, Sicherheitsstreifen, Patch, Folienelement oder als Etikett zum Aufbringen auf ein Sicherheitspapier, Wertdokument oder dergleichen ausgebildet sein. Insbesondere kann das Sicherheitselement transparente Bereiche oder Ausnehmungen überspannen. Ferner kann das Sicherheitselement bei Polymer- oder Hybridbanknoten unter Folie eingebettet sein.

Unter dem Begriff Sicherheitspapier wird hier insbesondere die noch nicht umlauffähige Vorstufe zu einem Wertsdokument verstanden, die neben dem erfindungsgemäßen Sicherheitselement beispielsweise auch weitere Echtheitsmerkmale (wie z.B. im Volumen vorgesehene Lumineszenzstoffe) aufweisen kann. Unter Wertdokumenten werden hier einerseits aus Sicherheitspapieren hergestellte Dokumente verstanden. Andererseits können Wertdokumente auch sonstige Dokumente und Gegenstände sein, die mit dem erfindungsgemäßen Sicherheitselement versehen werden können, damit die Wertdokumente nicht kopierbare Echtheitsmerkmale aufweisen, wodurch eine Echtheitsprüfung möglich ist und zugleich unerwünschtes Kopieren verhindert wird.

Ferner wird ein Wertdokument mit einem erfindungsgemäßen optisch variablen Flächenmuster (einschließlich seiner Weiterbildungen) bereitgestellt.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielshalber anhand der beigefügten Figuren, die auch erfindungswesentliche Merkmale offenbaren, noch näher erläutert. Zur besseren Anschaulichkeit wird in den Figuren teilweise auf eine maßstabs- und proportionsgetreue Darstellung verzichtet. Es zeigen:
- Figur 1: eine Draufsicht einer Banknote mit einem erfindungsgemäßen optisch variablen Flächenelement 10;
- Figur 2: eine vergrößerte Schnittansicht zweier Mikrospiegel des optisch variablen Flächenelementes von Figur 1;
- Figur 3: eine Draufsicht einer weiteren Ausführungsform eines rechteckigen Flächenbereichs 13 des erfindungsgemäßen optisch variablen Elementes 10;
- Figur 4: eine vergrößerte Schnittansicht von jeweils zwei Mikrospiegeln 14 aus den beiden Bereichen 21 und 22 gemäß Figur 3;
- Figuren 5A-5C: Darstellungen zur Erläuterung des "Rolling Bar"-Effektes;
- Figur 6: eine vergrößerte Schnittansicht zweier Mikrospiegel 14 zur Erläuterung des in Verbindung mit Figuren 5A-5C beschriebenen "Rolling Bar"-Effektes;
- Figur 7: eine vergrößerte Schnittansicht zweier Mikrospiegel 14 einer weiteren Ausführungsform des erfindungsgemäßen optisch variablen Flächenmusters, und
- Figur 8: eine vergrößerte Schnittansicht zweier Mikrospiegel 14 einer weiteren Ausführungsform des erfindungsgemäßen optisch variablen Flächenmusters 10.

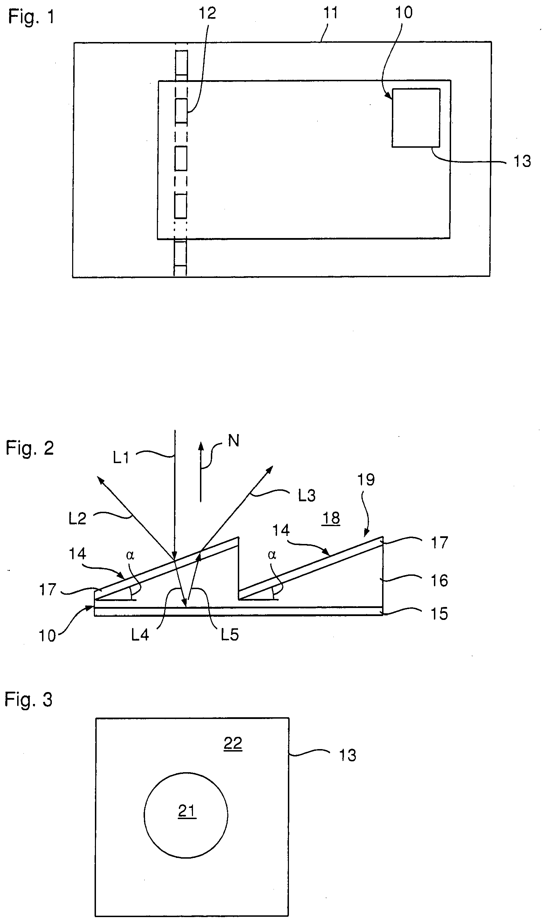

Bei der in Fig. 1 gezeigten Ausführungsform ist das erfindungsgemäße optisch variable Flächenmuster 10 als Sicherheitselement so in einer Banknote 11 integriert, dass es in der in Fig. 1 gezeigten Vorderseite der Banknote sichtbar ist. Alternativ kann das erfindungsgemäße optisch variable Element 10 z.B. als Fensterfaden 12 vorliegen.

Das optisch variable Element 10 weist in der hier beschriebenen Ausführungsform einen rechteckigen Flächenbereich 13 mit einer Vielzahl von Mikrospiegeln 14 auf, die auf einer Reflexionsschicht 15 gebildet sind, wie insbesondere der vergrößerten Schnittansicht zweier Mikrospiegel 14 in Fig. 2 zu entnehmen ist.

Die Mikrospiegel 14 sind durch eine Prägelackschicht 16, deren der Reflexionsschicht 15 abgewandte Seite strukturiert ist (hier mit einem Sägezahnprofil), und einer Beschichtung 17, die auf der strukturierten Seite der Prägelackschicht 16 vorgesehen ist, gebildet. Wie der Darstellung der Fig. 2 zu entnehmen ist, sind die Mikrospiegel 14 gegenüber der Reflexionsschicht 15 geneigt (Winkel α).

Die Beschichtung 17 kann, muss aber nicht vorgesehen sein. Insbesondere ist die Beschichtung 17 als teilreflektive Beschichtung ausgebildet, die von einem einfallenden Lichtstrahl L1 einen Teil spekular reflektiert und somit einen ersten reflektierten Lichtstrahl L2 erzeugt und die einen anderen Teil des einfallenden Lichtstrahls L1 transmittiert.

Der transmittierte Teil läuft durch die Prägelackschicht 16 (Lichtstrahl L4), trifft auf die Reflexionsschicht 15 und wird von dieser reflektiert (Lichtstrahl L5), läuft wiederum durch die Prägelackschicht 16 und die Beschichtung 17 und tritt als zweiter reflektierter Lichtstrahl L3 aus. Die an den Grenzflächen zwischen den verschiedenen Medien auftretende Brechung ist in Fig. 2 lediglich schematisch eingezeichnet. Es findet eine Brechung am Übergang zwischen der Umgebung und der Beschichtung 17 sowie an der Grenzfläche zwischen der Beschichtung 17 und der Prägelackschicht 16 statt. Des Weiteren sind Mehrfachreflexionen nicht berücksichtigt, die durch eine erneute Reflexion des Lichtstrahls L5 zur Reflexionsschicht 15 auftreten können.

Wie der Darstellung gemäß Fig. 2 entnommen werden kann, wird mit dem erfindungsgemäßen optisch variablen Flächenmuster 10 ein einfallender Lichtstrahl L1 an der Beschichtung 17 bzw. am Mikrospiegel 14 spekular in eine erste Richtung (erster reflektierter Lichtstrahl L2) sowie durch Brechung an der Grenzfläche zwischen der Umgebung und der Beschichtung 17 einerseits sowie der Grenzfläche zwischen der Beschichtung 17 und der Prägelackschicht 16 andererseits und Reflexion an der Reflexionsschicht 15 in eine zweite Richtung (zweiter reflektierter Lichtstrahl L3) reflektiert, wobei sich die beiden Richtungen unterscheiden.

Die Helligkeit und Farbe des ersten reflektierten Lichtstrahls L2 können dabei durch die optischen Eigenschaften der Beschichtung 17 vorgegeben werden. Die Helligkeit und Farbe des zweiten reflektierten Lichtstrahls L3 können z.B. durch die optischen Eigenschaften der Reflexionsschicht 15 vorgegeben werden. Des Weiteren ist es möglich, die Prägelackschicht 16 farbig auszubilden, was die Farbe und Helligkeit des zweiten reflektierten Lichtstrahls L2 beeinflusst.

Es ist somit möglich, die Farbe der beiden reflektierten Lichtstrahlen L2 und L3 unterschiedlich einzustellen, so dass ein Betrachter unter einem bestimmten Betrachtungswinkel bei Betrachtung des optisch variablen Flächenmusters 10 die Farbe des ersten reflektierten Lichtstrahls L2 wahrnehmen kann und unter einem zweiten Winkel die Farbe des zweiten reflektierten Lichtstrahls L3 wahrnehmen kann. Für den Betrachter wird somit ein Farb-Flip-Effekt bereitgestellt.

Die verschiedenen Farben können z.B. bei relativ geringer Steigung der Mikrospiegel 14 unter sehr dicht beieinanderliegenden Betrachtungswinkeln sichtbar werden. Damit sind sehr diskrete, d.h. schnelle und deutliche Farbwechsel möglich, die sich von den kontinuierlichen und eher langsamen Farbwechseln beispielsweise einer Dünnschicht-Colorshift-Beschichtung mit Absorber/ Dielektrikum/ Reflektor deutlich abheben.

Die Beschichtung 17 kann auch als reflexionserhöhende Beschichtung bezeichnet werden, da sie den Reflexionsgrad der Mikrospiegel 14 im Vergleich zu dem Fall ohne Beschichtung 17 erhöht.

Die den Mikrospiegeln 14 zugewandte Seite der Reflexionsschicht 15 ist bevorzugt eben ausgebildet. Des Weiteren kann die Reflexionsschicht 15 beispielsweise als metallische Beschichtung (z.B. Ag, Al, Cu, ...) oder als farbkippende Beschichtung, insbesondere als Dünnschichtsystem ausgebildet sein. Das Dünnschichtsystem kann z.B. einen Absorber/Dielektrikum/Reflektor-Aufbau aufweisen.

Die Strukturierung der der Reflexionsschicht 5 abgewandten Seite der Prägelackschicht 16 ist bevorzugt durch einen Prägevorgang erzeugt. Die strukturierte Prägelackschicht 16 (zusammen mit der optional vorgesehenen Beschichtung 17) dient somit erfindungsgemäß gleichzeitig als Spiegel (für den ersten reflektierten Lichtstrahl L2) und als Prisma (für den zweiten reflektierten Lichtstrahl L3).

Das Material der Prägelackschicht 16 und/oder der Beschichtung 17 ist so gewählt, dass sich die Brechzahl dieses Materials von der Brechzahl des an die Prägelackschicht 16 bzw. die Beschichtung 17 angrenzenden Mediums 18 (hier z.B. Luft) unterscheidet, Insbesondere ist die Brechzahl der Prägelackschicht 16 bzw. der Beschichtung 17 größer als die des Mediums 18. Als Medium 18 kann z.B. auch eine Schutzlackschicht vorgesehen sein (nicht eingezeichnet).

Insbesondere können die Brechungsindizes der Prägelackschicht 16 bzw. der Beschichtung 17 sowie des Mediums 18 so gewählt sein, dass bei senkrecht einfallendem Licht L1 (bezogen auf die Reflexionsschicht 15), die beiden reflektierten Lichtstrahlen L2 und L3 auf die gleiche Seite der makroskopischen Normalen N des optisch variablen Flächenmusters 10 (Fig. 2) reflektiert werden, allerdings unter verschiedenen Winkeln. Damit lassen sich beispielsweise zweifarbige Laufeffekte erzeugen, die nicht entgegengesetzt sondern in die gleiche Richtung laufen, allerdings mit unterschiedlichen Geschwindigkeiten. So lässt sich z.B. ein "Rolling Bar" erzeugen, bei dem zwei verschiedenfarbige Balken mit unterschiedlicher Geschwindigkeit in dieselbe Richtung laufen.

Bei dem erfindungsgemäßen optisch variablen Flächenmuster 10 bilden somit die Mikrospiegel 14 ein Mikrospiegelarray bzw. eine Mikrospiegelanordnung 19, das/die die spekulare Reflexion des ersten reflektierten Lichtstrahls L2 durchführt und die Reflexion des transmittierten Teils des einfallenden Lichtstrahls L1 an der Reflexionsschicht 15 ermöglicht, so dass der zweite reflektierte Lichtstrahl L3 erzeugt wird.

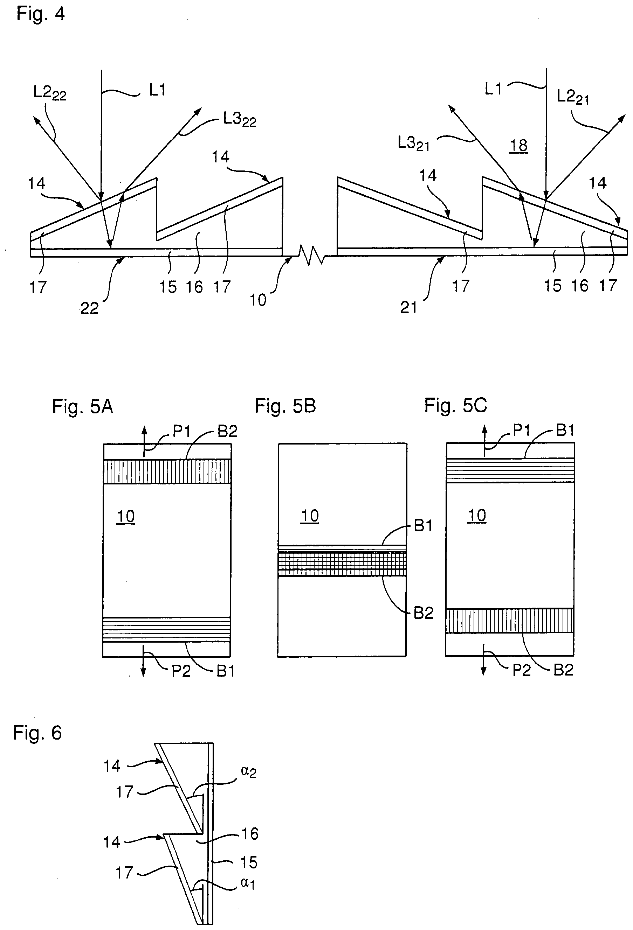

Das optisch variable Flächenmuster 10 kann z.B. einen ersten und einen zweiten Bereich 21, 22, wie in einer schematischen Draufsicht in Fig. 3 angedeutet ist, aufweisen, in denen sich die Neigungen (Winkel α) der Mikrospiegel 14 des Mikrospiegelarrays 19 unterscheiden. Insbesondere können die Neigungen so gewählt sein, dass die Richtung des ersten reflektierten Lichtstrahls L2₂₁ aus dem ersten Bereich 21 mit der Richtung des zweiten reflektierten Lichtstrahls L3₂₂ aus dem zweiten Bereich 22 zusammenfällt, wobei sich die Farben dieser beiden Lichtstrahlen jedoch unterscheiden. Eine entsprechende Schnittansicht der Mikrospiegel 14 aus den Bereichen 21 und 22 ist in Fig. 4 gezeigt. Somit sind für den Betrachter die beiden Farben unter gleichem Betrachtungswinkel sichtbar. Dem Betrachter können diese Farben somit extrem hoch aufgelöst und perfekt registriert nebeneinander positioniert dargeboten werden. Der zweite reflektierte Lichtstrahl L3₂₁ aus dem ersten Bereich 21 und der erste reflektierte Lichtstrahl L2₂₂ aus dem zweiten Bereich weisen hier unterschiedliche Richtungen auf.

In einer weiteren Ausbildung kann mit dem erfindungsgemäßen optisch variablen Flächenmuster der sogenannte "Rolling Bar"-Effekt erzeugt werden. Dazu kann z.B. die Reflexionsschicht 15 als Colorshift-Beschichtung und die Beschichtung 17 als Schicht mit hoher Brechzahl ausgebildet sein, so dass bei entsprechend gewählten Schichtdicken der erste reflektierte Lichtstrahl L2 grün erscheint und der zweite reflektierte Lichtstrahl L3 magenta erscheint. In den Darstellungen in Fig. 5A-5C ist der magentafarbene Balken B1 horizontal schraffiert und der grüne Balken B2 vertikal schraffiert. In einer Grundstellung überlagern sich beide Balken B1, B2 in der Mitte des optisch variablen Flächenmusters 10, wobei in Fig. 5B, die diese Grundstellung zeigt, zur Verdeutlichung keine exakte Überlagerung eingezeichnet ist. Beim Kippen in eine erste Richtung kann beispielsweise der magentafarbene Balken B1 nach oben und der grüne Balken B2 nach unten wandern, wie in Fig. 5C durch die eingezeichneten Pfeile P1 und P2 angedeutet ist. Beim Kippen in die Gegenrichtung wandern die beiden Balken in die jeweils andere Richtung, d.h. der magentafarbene Balken B1 nach unten und der grüne Balken B2 nach oben (Fig. 5A), wobei die Bewegungsrichtungen wiederum durch die Pfeile P1 und P2 angedeutet ist.

Um diesen Bewegungseffekt zu erreichen, kann z.B. die Neigung α der Mikrospiegel 14 in der gewünschten Bewegungsrichtung variiert werden, wie schematisch in der Schnittansicht in Fig. 6 dargestellt ist, die einen Schnitt in Richtung des Pfeiles P1 gemäß Fig. 5A von zwei benachbarten Mikrospiegeln 14 zeigt. Die eingezeichneten Neigungswinkel α₁ und α₂ unterscheiden sich, wobei hier der Neigungswinkel α von unten nach oben zunimmt.

Der beschriebene "Rolling Bar"-Effekt ist ein Beispiel eines zweifarbigen überlappenden Laufeffektes, der mit dem erfindungsgemäßen optischen Flächenmuster verwirklicht werden kann. Es sind natürlich auch andere Laufeffekte realisierbar. So können insbesondere sogenannte Flip-, Lauf- und/oder Pumpeffekte beim Verkippen des optisch variablen Flächenmusters realisiert werden, die gleich- oder gegenläufig sein können.

Ferner kann auch ein Pumpeffekt realisiert werden, bei dem die Umrisse eines Symbols oder einer Wertzahl nach innen oder außen "pumpen". Besonders attraktiv sind hier wiederholende Pumpeffekte mit vielen gleichzeitig sichtbaren Umrisslinien, die unter dem richtigen Betrachtungswinkel dann sehr filigran in unterschiedlichen Farben aufleuchten können.

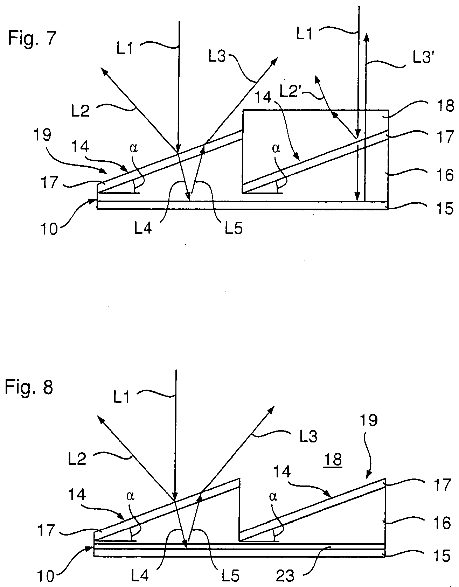

Das Mikrospiegelarray 14 kann bereichsweise in einem Medium 18 eingebettet sein, das einen ähnlichen Brechungsindex wie die Prägelackschicht 16 bzw. die Beschichtung 17 aufweist, wie in Fig. 7 dargestellt ist. Damit wird die Brechung an der Oberseite der Reliefstruktur lokal aufgehoben, wodurch sich die Richtungen des ersten und zweiten reflektierten Lichtstrahls L2' und L3' aus Bereichen mit Medium 18 von den Richtungen des ersten und zweiten Lichtstrahls L2, L3 aus Bereichen ohne Medium 18 unterscheiden. Dies ist insbesondere darin begründet, dass das Medium 18 für den zweiten reflektierten Lichtstrahl L3' die Brechungseffekte aufhebt und für den ersten reflektierten Lichtstrahl L2' Brechungseffekte hinzufügt. Wie Fig. 7 im Detail zu entnehmen ist, wird im Bereich mit dem Medium 18 der erste reflektierte Lichtstrahl L2' auch an der Oberseite der Schicht 18 gebrochen und läuft damit im Allgemeinen in eine andere Richtung als der erste Lichtstrahl L2 aus dem Bereich ohne Beschichtung 18. Der zweite Lichtstrahl L3' aus dem Bereich mit Beschichtung 18 ist immer im Spiegelreflex der Reflexionsschicht 15 zu sehen und läuft somit in eine andere Richtung als der zweite Lichtstrahl L3 aus dem Bereich ohne Beschichtung 18.

Ferner kann das optisch variable Flächenmuster 10 z.B. so ausgebildet sein, dass der erste reflektierte Lichtstrahl L2 grün und der gebrochene und unten reflektierte zweite Lichtstrahl L3 magenta ist. Wenn man dann die Steigungen der Mikrospiegel 14 so wählt, dass sie in den Bereichen 21 und 22 gemäß Fig. 3 gleich sind und im Bereich 22 die die Brechung aufhebende Beschichtung 18 auf der Oberseite des optisch variablen Flächenmusters 10 vorsieht, erreicht man die folgenden optischen Effekte. Der Bereich 22 ist unter zwei verschiedenen ersten Winkeln hell sichtbar. Durch die Lichtstrahlen L2' ist er in grün und durch die Lichtstrahlen L3' in magenta sichtbar. Der Bereich 21 ist unter zwei weiteren Winkeln in grün (durch die Lichtstrahlen L2) sowie in magenta (Lichtstrahlen L3) sichtbar. Da die Beschichtung 18 einen ähnlichen oder idealerweise gleichen Brechungsindex aufweist wie die Beschichtung 17, liegt hier noch die Besonderheit vor, dass die Reflexionsrichtung des zweiten Lichtstrahls L3' immer einem Spiegelreflex an der Reflexionsschicht 15 entspricht (unabhängig von der Neigung α der Mikrospiegel 14). Der Bereich 22 leuchtet somit im Spiegelreflex der Reflexionsschicht 15, also immer als homogener magentafarbener Bereich auf, auch wenn die Mikrospiegel 14 in diesem Bereich z.B. eine variierende Orientierung aufweisen.

Die Strukturierung der der Reflexionsschicht 15 abgewandten Seite der Prägelackschicht 16 zur Ausbildung der Mikrospiegel 14 kann regelmäßig oder unregelmäßig sein. Insbesondere sind periodische oder aperiodische Sägezahnstrukturen möglich.

Auf der Prägelackschicht 16 kann z.B. keine Beschichtung 17 vorgesehen sein. In diesem Fall liegt eine Grenzfläche der Prägelackschicht 16 zu Luft vor. Der Prägelack der Prägelackschicht 16 kann bevorzugt ein hochbrechender Prägelack sein. Natürlich muß die Schicht 16 keine Prägelackschicht sein, sondern kann auch jede andere transparente oder teiltransparente Schicht mit einer strukturierten Oberseite bzw. mit einer Reliefstruktur an der Oberseite sein.

Die Beschichtung 17 kann eine dielektrische Beschichtung sein, insbesondere eine hochbrechende Beschichtung oder eine niedrigbrechende Beschichtung auf hochbrechendem Prägelack 16. Auch ist ein mehrschichtiges Dünnfilmsystem (Metall/Dielektrikum/Metall) oder auch ein rein dielektrisches Mehrschichtsystem möglich. Des Weiteren kann die Beschichtung 17 als Flüssigkristallschicht ausgebildet sein. Eine Ausgestaltung der Oberfläche der Mikrospiegel 14 mit farbgebenden Prägestrukturen und/oder Nanostrukturen ist ebenfalls möglich (z.B. semitransparent metallisierte Subwellenlängenstrukturen, insbesondere Subwellenlängengitter).

Die Reflexionsschicht 15 kann z.B. als Flüssigkristallschicht (vorteilhaft vor dunklem Hintergrund) ausgebildet sein. Es ist auch möglich, farberzeugende Nanostrukturen (z.B. Subwellenlängenstrukturen, insbesondere Subwellenlängengitter), photonische Kristalle, Dünnfilm-Colorshift oder eine einfache Metallisierung (z.B. Al, Au, Cu, Cr, ...) vorzusehen.

Die Reflexionsschicht 15 kann teildurchlässig sein, so dass das erfindungsgemäße optisch variable Flächenmuster 10 auch einen von der Unterseite sichtbaren optischen variablen Effekt aufweisen kann (durch Transmission durch die Reflexionsschicht 15, Reflexion an den Mikrospiegeln 14 und erneute Transmission durch die teildurchlässige untere Reflexionsschicht 15 zurück zur Rückseite).

Das erfindungsgemäße optisch variable Flächenmuster 10 kann insbesondere so ausgebildet sein, dass die beiden reflektierten Lichtstrahlen L2 und L3 (insbesondere etwa) gleich hell erscheinen und/oder eine unterschiedliche Farbe aufweisen (insbesondere Komplementärfarben). So kann z.B. die Beschichtung 17 eine erste Farbe besonders stark reflektieren und die Komplementärfarbe gleichzeitig in hohem Maß hindurchlassen. Die Komplementärfarbe wird dann an der Reflexionsschicht 15 reflektiert. In diesem Fall sind insbesondere für die Beschichtung 17 dielektrische Schichten, Multilagen oder Flüssigkristallschichten besonders geeignet, bei denen das einfallende Licht weitgehend ohne Absorptionsverlust in reflektiertes und transmittiertes Licht aufgespalten werden kann. Des Weiteren kann das optisch variable Flächenmuster 10 so ausgebildet werden, dass einer der beiden reflektierten Lichtstrahlen L2, L3 farblos (weiß) erscheint, wobei weiß im Sinne der vorliegenden Erfindung auch als Farbe bezeichnet wird.

Zum Schutz vor Abformung der Mikrospiegel 14 können die Mikrospiegel 14 beispielsweise eingebettet werden (so kann z.B. die Prägelackschicht 16 eine größere Brechzahl aufweisen als die zur Einbettung vorzusehende Schicht, die z.B. eine Schutzlackschicht sein kann). Es ist jedoch auch möglich, dass die Einbettungsschicht eine größere Brechzahl aufweist als die Prägelackschicht 16.

Des Weiteren kann eine Schutzfolie vorgesehen sein, die so gewählt ist, dass die brechende Wirkung der Mikrospiegel 14 erhalten bleibt und nicht beispielsweise durch einen Kaschierkleber mit ähnlichem Brechungsindex zerstört wird. So kann die Schutzfolie beispielsweise punktweise verschweißt (beispielsweise mit einem Laser), aufgeklebt, etc. werden, um Luft- bzw. Gaseinschlüsse zu bewahren. Es ist auch möglich, einen hochbrechenden Prägelack zu verwenden oder z.B. im Bereich des optisch variablen Flächenmusters den Kaschierkleber für die Schutzfolie auszusparen.

Das erfindungsgemäße optisch variable Flächenmuster wird bevorzugt auf einer Trägerfolie gefertigt und/oder verwendet. Die Trägerfolie kann insbesondere unter der Reflexionsschicht 15, zwischen der Reflexionsschicht 15 und der Prägelackschicht 16 bzw. den Mikrospiegeln 14 oder auch oberhalb der Mikrospiegel 14 angeordnet sein.

Die Reflexionsschicht 15 sowie die Beschichtung 17 können bereichsweise, z.B. in den gleichen oder unterschiedlichen, überlappenden oder nicht überlappenden Bereichen ausgespart sein. Die entsprechenden Farben bzw. Effekte sind dann entsprechend nur bereichsweise sichtbar.

Die Mikrospiegel 14 können vorteilhaft in einen eingefärbten Prägelack 16 geprägt werden. Somit lassen sich vergleichsweise kostengünstig Farben des gebrochenen und unten reflektierten zweiten Lichtstrahls L3 erzeugen. Alternativ kann auch beispielsweise zwischen den Mikrospiegeln 14 aus transparentem Prägelack und der Reflexionsschicht 15 eine separate farbige Schicht 23 (z.B. Lackschicht) vorgesehen sein, wie in Fig. 8 gezeigt ist.

Das erfindungsgemäße optisch variable Flächenmuster 10 kann auch als Sicherheitsfaden 12 (Figur 1) ausgebildet sein. Ferner kann das optisch variable Flächenmuster 10 nicht nur, wie beschrieben, auf einer Trägerfolie ausgebildet werden, von der es in bekannter Weise auf das Wertdokument übertragen werden kann. In einer nicht unter die Ansprüche fallenden Ausführungsform ist es auch möglich, das optisch variable Flächenmuster 10 direkt auf dem Wertdokument auszubilden. So kann ein direkter Druck mit anschließender Prägung der Mikrospiegel auf ein Polymersubstrat durchgeführt werden, um beispielsweise bei Kunststoffbanknoten ein erfindungsgemäßes optisch variables Flächenmuster auszubilden. Das erfindungsgemäße optisch variable Flächenmuster kann in verschiedensten Substraten ausgebildet werden. Insbesondere kann es in oder auf einem Papiersubstrat, einem Papier mit Synthesefasern, d.h. Papier mit einem Anteil x polymeren Materials im Bereich von 0 < x < 100 Gew.-%, einer Kunststofffolie, z. B. einer Folie aus Polyethylen (PE), Polyethylenterephthalat (PET), Polybutylenterephthalat (PBT), Polyethylennaphthalat (PEN), Polypropylen (PP) oder Polyamid (PA), oder einem mehrschichtigem Verbund, insbesondere einem Verbund mehrerer unterschiedlicher Folien (Kompositverbund) oder einem Papier-Folien-Verbund (Folie/Papier/Folie oder Papier/Folie/Papier), wobei das optisch variable Flächenmuster in oder auf oder zwischen jeder der Schichten eines solchen mehrschichtigen Verbunds vorgesehen werden kann, ausgebildet werden.

### Bezugszeichenliste

- 10: optisch variables Flächenmuster
- 11: Banknote
- 12: Fensterfaden
- 13: rechteckiger Flächenbereich
- 14: Mikrospiegel
- 15: Reflexionsschicht
- 16: Prägelackschicht
- 17: Beschichtung
- 18: Medium
- 19: Mikrospiegelarray
- 21: erster Bereich
- 22: zweiter Bereich
- 23: Farbschicht
- L1: einfallender Lichtstrahl
- L2, L2': erster reflektierter Lichtstrahl
- L3, L3': zweiter reflektierter Lichtstrahl
- L4, L5: Lichtstrahl
- N: makroskopische Oberflächennormale
- P1, P2: Bewegungsrichtung
- B1: magentafarbener Balken
- B2: grüner Balken

## Patentansprüche

1. Optisch variables Flächenmuster (10) zur Verwendung als Sicherheitselement zum Aufbringen auf einen zu schützenden Gegenstand, mit einer Reflexionsschicht (15) und
einer auf der Reflexionsschicht (15) ausgebildeten Mikrospiegelanordnung (20), die eine Vielzahl von teiltransparenten Mikrospiegeln (14) aufweist, wobei die Mikrospiegel (14) gegenüber der Reflexionsschicht (15) geneigt sind, so dass auf die Mikrospiegelanordnung (20) einfallendes Licht (L1) durch spekulare Reflexion an den teiltransparenten Mikrospiegeln (14) zum Teil in eine erste Richtung reflektiert wird und zum Teil in eine von der ersten Richtung verschiedene zweite Richtung dadurch reflektiert wird, dass es durch die teiltransparenten Mikrospiegel (14) hindurchläuft, auf die Reflexionsschicht (15) trifft, dort spekular reflektiert wird und danach wiederum durch die teiltransparenten Mikrospiegel (14) läuft, wobei eine transparente oder teiltransparente Schicht (16) auf der Reflexionsschicht (15) ausgebildet ist, wobei zur Ausbildung der Mikrospiegel die von der Reflexionsschicht abgewandte Seite der transparenten oder teiltransparenten Schicht (16) in einem vorbestimmten Bereich strukturiert ist, und wobei zur Ausbildung der teiltransparenten Mikrospiegel im vorbestimmten Bereich eine teilreflektive Beschichtung (17) ausgebildet ist,
wobei das optisch variable Flächenmuster (10) so ausgebildet ist, dass beim Kippen des Flächenmusters mit den in die erste Richtung reflektierten Lichtstrahlen ein erster Bewegungseffekt und mit den in die zweite Richtung reflektierten Lichtstrahlen ein zweiter Bewegungseffekt verwirklicht wird.

2. Optisch variables Flächenmuster nach Anspruch 1, bei dem die teiltransparente Schicht als gefärbte Schicht ausgebildet ist.

3. Optisch variables Flächenmuster nach Anspruch 1 oder 2, bei dem die Strukturierung der transparenten oder teiltransparenten Schicht durch Prägen gebildet ist.

4. Optisch variables Flächenmuster nach einem der Ansprüche 1 bis 3, bei dem zwischen der Reflexionsschicht und der transparenten oder teiltransparenten Schicht eine teiltransparente Farbschicht angeordnet ist, oder bei dem die transparente oder teiltransparente Schicht oder die teilreflektive Beschichtung zumindest in einem Teil des sichtbaren Spektrums einen Brechungsindex von mindestens 1,6, bevorzugt mindestens 1,8 aufweist.

5. Optisch variables Flächenmuster nach einem der Ansprüche 1 bis 4, bei dem die teiltransparenten Mikrospiegel in ein Medium eingebettet sind, das zumindest in einem Teil des sichtbaren Spektrums einen Brechungsindex aufweist, der von dem Brechungsindex der transparenten oder teiltransparenten Schicht oder der teilreflektiven Beschichtung um mindestens 0,1, bevorzugt mindestens 0,2 und besonders bevorzugt mindestens 0,4 abweicht.

6. Optisch variables Flächenmuster nach einem der obigen Ansprüche, bei dem die Reflexionsschicht und die Mikrospiegelanordnung so ausgebildet sind, dass das in die erste und zweite Richtung reflektierte Licht unterschiedliche Farben aufweist.

7. Optisch variables Flächenmuster nach einem der obigen Ansprüche, bei dem die teiltransparenten Mikrospiegel ein sägezahnförmiges Profil bilden.

8. Optisch variables Flächenmuster nach einem der obigen Ansprüche, bei dem die den teiltransparenten Mikrospiegeln zugewandte Seite der Reflexionsschicht und/ oder die den teiltransparenten Mikrospiegeln abgewandte Seite der Reflexionsschicht eben ausgebildet sind/ ist, und/ oder bei dem mehrere der teiltransparenten Mikrospiegel in einer Anordnungsrichtung nebeneinander angeordnet sind und ihre Abmessung in der Anordnungsrichtung im Bereich von 2 µm bis 3 mm, bevorzugt von 3 µm bis 100 µm und besonders bevorzugt von 5 µm bis 30 µm liegt.

9. Optisch variables Flächenmuster nach einem der obigen Ansprüche, bei dem bei senkrecht einfallendem Licht die erste und zweite Richtung des reflektierten Lichtes auf unterschiedlichen Seiten der makroskopischen Oberflächennormalen des optisch variablen Flächenmusters liegen.

10. Optisch variables Flächenmuster nach einem der Ansprüche 1 bis 9, bei dem die teilreflektive Beschichtung eine oder mehrere dielektrische Schichten, eine semitransparente metallische Schicht, eine Schicht aus halbleitendem Material und/ oder eine flüssigkristalline Schicht aufweist.

11. Optisch variables Flächenmuster nach einem der Ansprüche 1 bis 10, bei dem in der strukturierten Oberfläche der transparenten oder teiltransparenten Schicht oder in der teilreflektiven Beschichtung Subwellenlängenstrukturen, insbesondere Subwellengitter, ausgebildet sind.

12. Optisch variables Flächenmuster nach einem der obigen Ansprüche, bei dem die Reflexionsschicht eine oder mehrere metallische Schichten, eine Dünnfilm-Colorshift-Schicht, eine oder mehrere dielektrische Schichten und/oder eine flüssigkristalline Schicht aufweist, und/ oder bei dem in der Reflexionsschicht Subwellenlängenstrukturen, insbesondere Subwellenlängengitter, ausgebildet sind.

13. Optisch variables Flächenmuster nach einem der obigen Ansprüche, bei dem die Reflexionsschicht und/oder die teilreflektive Beschichtung in Form von Mustern, Zeichen oder Codierungen vorliegt und/oder Aussparungen in Form von Mustern, Zeichen oder Codierungen aufweist.

14. Verwendung des optisch variablen Flächenmusters (10) nach einem der obigen Ansprüche als Sicherheitselement, insbesondere als Sicherheitselement für Sicherheitspapiere, Wertdokumente oder dergleichen.

15. Wertdokument mit einem optisch variablen Flächenmuster nach einem der Ansprüche 1 bis 13.

## Claims

1. Optically variable surface pattern (10) for use as a security element for application to an object to be protected, comprising
a reflection layer (15) and
a micromirror arrangement (20), which is formed on the reflection layer (15) and has a multiplicity of partially transparent micromirrors (14),
wherein the micromirrors (14) are inclined in relation to the reflection layer (15) such that some of the light (L1) that is incident on the micromirror arrangement (20) is reflected by specular reflection at the partially transparent micromirrors (14) in a first direction and some of the light is reflected in a second direction, which differs from the first direction, by travelling through the partially transparent micromirrors (14), being incident on the reflection layer (15), being specularly reflected there and then travelling back through the partially transparent micromirrors (14), wherein a transparent or partially transparent layer (16) is formed on the reflection layer (15), wherein the side of the transparent or partially transparent layer (16) facing away from the reflection layer is structured in a predetermined region to form the micromirrors, and wherein a partially reflective coating (17) is formed in the predetermined region to form the partially transparent micromirrors,
wherein the optically variable surface pattern (10) is embodied such that, when the surface pattern is tilted, a first motion effect is realized with the light beams which are reflected in the first direction and a second motion effect is realized with the light beams which are reflected in the second direction.

2. Optically variable surface pattern according to Claim 1, wherein the partially transparent layer is in the form of a coloured layer.

3. Optically variable surface pattern according to Claim 1 or 2, wherein the structuring of the transparent or partially transparent layer is formed by embossing.

4. Optically variable surface pattern according to any of Claims 1 to 3, wherein a partially transparent colour layer is arranged between the reflection layer and the transparent or partially transparent layer, or wherein the transparent or partially transparent layer or the partially reflective coating has at least in part of the visible spectrum a refractive index of at least 1.6, preferably at least 1.8.

5. Optically variable surface pattern according to any of Claims 1 to 4, wherein the partially transparent micromirrors are embedded in a medium that has at least in part of the visible spectrum a refractive index that deviates from the refractive index of the transparent or partially transparent layer or the partially reflective coating by at least 0.1, preferably at least 0.2, and with particular preference at least 0.4.

6. Optically variable surface pattern according to any of the preceding claims, wherein the reflection layer and the micromirror arrangement are embodied such that the light reflected in the first and second directions has different colours.

7. Optically variable surface pattern according to any of the preceding claims, wherein the partially transparent micromirrors form a sawtooth profile.

8. Optically variable surface pattern according to any of the preceding claims, wherein the side of the reflection layer facing the partially transparent micromirrors and/or the side of the reflection layer facing away from the partially transparent micromirrors is/are planar, and/or wherein a plurality of the partially transparent micromirrors are arranged next to one another in an arrangement direction and their dimensions in the arrangement direction lie in the range from 2 µm to 3 mm, preferably from 3 µm to 100 µm, and with particular preference from 5 µm to 30 µm.

9. Optically variable surface pattern according to any of the preceding claims, wherein under normal incidence light the first and second directions of the reflected light lie on different sides of the macroscopic surface normal of the optically variable surface pattern.

10. Optically variable surface pattern according to any of Claims 1 to 9, wherein the partially reflective coating has one or more dielectric layers, a semi-transparent metallic layer, a layer of semiconductor material and/or a liquid-crystal layer.

11. Optically variable surface pattern according to any of Claims 1 to 10, wherein subwavelength structures, in particular subwavelength gratings, are formed in the structured surface of the transparent or partially transparent layer or in the partially reflective coating.

12. Optically variable surface pattern according to any of the preceding claims, wherein the reflection layer has one or more metallic layers, a thinfilm colour-shift layer, one or more dielectric layers and/or a liquid-crystal layer, and/or wherein subwavelength structures, in particular subwavelength gratings, are formed in the reflection layer.

13. Optically variable surface pattern according to any of the preceding claims, wherein the reflection layer and/or the partially reflective coating is present in the form of patterns, symbols or codings and/or has cutouts in the form of patterns, symbols or codings.

14. Use of the optically variable surface pattern (10) according to any of the preceding claims as a security element, in particular as a security element for security papers, documents of value or the like.

15. Document of value having an optically variable surface pattern according to any of Claims 1 to 13.

## Revendications

1. Motif de surface (10) optiquement variable destiné à être utilisé comme élément de sécurité à appliquer sur un objet à protéger, comprenant une couche réfléchissante (15) et
un arrangement de micromiroirs (20) formé sur la couche réfléchissante (15), lequel possède une pluralité de micromiroirs (14) partiellement transparents, les micromiroirs (14) étant inclinés par rapport à la couche réfléchissante (15), de sorte que la lumière (L1) incidente sur l'arrangement de micromiroirs (20), par réflexion spéculaire sur les micromiroirs (14) partiellement transparents, soit réfléchie en partie dans une première direction et soit réfléchie en partie dans une deuxième direction, différente de la première direction, de telle sorte qu'elle passe à travers les micromiroirs (14) partiellement transparents, viennent frapper la couche réfléchissante (15), y soit réfléchie de manière spéculaire et passe ensuite de nouveau à travers les micromiroirs (14) partiellement transparents, une couche (16) transparente ou partiellement transparente étant formée sur la couche réfléchissante (15), le côté de la couche (16) transparente ou partiellement transparente qui se trouve à l'opposé de la couche réfléchissante étant structuré dans une zone prédéterminée en vue de former les micromiroirs, et un revêtement (17) partiellement réfléchissant étant formé dans la zone prédéterminée en vue de former les micromiroirs partiellement transparents,
le motif de surface (10) optiquement variable étant configuré de telle sorte que lors d'un basculement du motif de surface, un premier effet de mouvement est matérialisé avec les rayons lumineux réfléchis dans la première direction et un deuxième effet de mouvement avec les rayons lumineux réfléchis dans la deuxième direction.

2. Motif de surface optiquement variable selon la revendication 1, avec lequel la couche partiellement transparente est réalisée sous la forme d'une couche colorée.

3. Motif de surface optiquement variable selon la revendication 1 ou 2, avec lequel la structuration de la couche transparente ou partiellement transparente est formée par matriçage.

4. Motif de surface optiquement variable selon l'une des revendications 1 à 3, avec lequel une couche de couleur est disposée entre la couche réfléchissante et la couche transparente ou partiellement transparente, ou avec lequel la couche transparente ou partiellement transparente ou le revêtement partiellement réfléchissant possède, au moins dans une partie du spectre visible, un indice de réfraction d'au moins 1,6, de préférence d'au moins 1,8.

5. Motif de surface optiquement variable selon l'une des revendications 1 à 4, avec lequel les micromiroirs partiellement transparents sont incorporés dans un fluide, lequel possède au moins dans une partie du spectre visible un indice de réfraction qui diffère de l'indice de réfraction de la couche transparente ou partiellement transparente ou du revêtement partiellement réfléchissant d'au moins 0,1, de préférence d'au moins 0,2 et notamment de préférence d'au moins 0,4.

6. Motif de surface optiquement variable selon l'une des revendications précédentes, avec lequel la couche réfléchissante et l'arrangement de micromiroirs sont configurés de telle sorte que la lumière réfléchie dans la première et la deuxième direction présente des couleurs différentes.

7. Motif de surface optiquement variable selon l'une des revendications précédentes, avec lequel les micromiroirs partiellement transparents forment un profil en forme de dents de scie.

8. Motif de surface optiquement variable selon l'une des revendications précédentes, avec lequel le côté de la couche réfléchissante faisant face aux micromiroirs partiellement transparents et/ou le côté de la couche réfléchissante qui se trouve à l'opposé des micromiroirs partiellement transparents est/sont de configuration plane, et/ou avec lequel plusieurs des micromiroirs partiellement transparents sont disposés les uns à côté des autres dans une direction d'arrangement et leur dimension dans la direction d'arrangement est comprise dans la plage de 2 µm à 3 µm, de préférence de 3 µm à 100 µm et notamment de préférence de 5 µm à 30 µm.

9. Motif de surface optiquement variable selon l'une des revendications précédentes, avec lequel, dans le cas d'une lumière incidente perpendiculairement, la première et la deuxième direction de la lumière réfléchie se trouvent sur des côtés différents de la normale de surface macroscopique du motif de surface optiquement variable.

10. Motif de surface optiquement variable selon l'une des revendications 1 à 9, avec lequel le revêtement partiellement réfléchissant possède une ou plusieurs couches diélectriques, une couche métallique semi-transparente, une couche en matériau semiconducteur et/ou une couche en cristaux liquides.

11. Motif de surface optiquement variable selon l'une des revendications 1 à 10, avec lequel des structures à sous-longueur d'onde, notamment des réseaux à sous-longueur d'onde, sont formés dans la surface structurée de la couche transparente ou semi-transparente ou dans le revêtement partiellement réfléchissant.

12. Motif de surface optiquement variable selon l'une des revendications précédentes, avec lequel la couche réfléchissante possède une ou plusieurs couches métalliques, une couche de décalage de couleur à film mince, une ou plusieurs couches diélectriques et/ou une couche en cristaux liquides, et/ou avec lequel des structures à sous-longueur d'onde, notamment des réseaux à sous-longueur d'onde, sont formés dans la couche réfléchissante.

13. Motif de surface optiquement variable selon l'une des revendications précédentes, avec lequel la couche réfléchissante et/ou le revêtement partiellement réfléchissant est présent sous la forme de motifs, de caractères ou de codages et/ou présente des creux sous la forme de motifs, de caractères ou de codages.

14. Utilisation d'un motif de surface (10) optiquement variable selon l'une des revendications précédentes en tant qu'élément de sécurité, notamment en tant qu'élément de sécurité pour des papiers sécurisés, des documents de valeur ou similaire.

15. Document de valeur comprenant un motif de surface optiquement variable selon l'une des revendications 1 à 13.
